# FASCICULE DE BREVET EUROPEEN

(11) **EP 3 154 797 B1**
(45) Date de publication et mention de la délivrance du brevet: **04.03.2020**
(21) Numéro de dépôt: 15732871.7
(22) Date de dépôt: 12.06.2015
(51) Int. Cl.: B43K 29/00, B43K 29/10, B43K 7/00, C09D 11/00, C09D 11/101, C09D 11/16, C09D 11/17, C09D 11/18, C09D 11/20

(54) **ENCRE D'ECRITURE PHOTORETICULABLE**
PHOTOHÄRTBARE TINTE ZUM SCHREIBEN
PHOTOCURABLE INK FOR WRITING

(30) Priorité: 16.06.2014 FR 1455495
(43) Date de publication de la demande: 19.04.2017
(73) Titulaire: Société BIC, 92110 Clichy (FR)
(72) Inventeur: ESTEVENY, Nadège, F-77144 Montevrain (FR); VUILLAUME, Kathy, F-77700 Serris (FR); DEBRAUWER, Christelle, F-77860 Saint-Germain-sur-Morin (FR)
(74) Mandataire: Cabinet Beau de Loménie
(86) Numéro de dépôt international: PCT/FR2015/051559
(87) Numéro de publication internationale: WO 2015/193590

(56) Documents cités:
- WO-A1-2006/111494
- WO-A1-2008/009987
- WO-A1-2008/093071
- WO-A1-2010/078735

## Description

La présente invention concerne le domaine des encres d'écriture photoréticulables, destinées à servir d'encre de sécurité.

Une encre à base de pigments peut être utilisée comme encre de sécurité c'est-à-dire être ineffaçable et donc infalsifiable. En effet, les pigments sont, par définition, insolubles dans les solvants. Ainsi, lors du dépôt sur une feuille de papier (par le biais d'un instrument d'écriture), ils s'infiltrent dans les fibres du papier, par l'intermédiaire du liant, et y restent «piégés». Il est donc très difficile de les y déloger, même par le biais de solvants dans lesquels le papier sur lequel le dépôt a été effectué serait mis à tremper.
Cependant, certaines de ces encres peuvent être ôtées du papier par abrasion ou friction et ne sont donc pas toujours permanentes.
De plus, les pigments étant en dispersion dans le milieu considéré, le travail réalisé en amont pour formuler l'encre est plus complexe que dans le cas d'une encre à base de colorants. En effet, la dispersion nécessite un broyage homogène des pigments et l'obtention de particules de taille inférieure au micron afin d'obtenir une dispersion homogène (sans dépôt ou ségrégation). En outre comme l'application envisagée est celle d'une encre d'écriture, la taille des pigments ne doit pas être supérieure à la dimension des canaux de la pointe d'écriture, afin de ne pas les boucher ce qui entraînerait sinon inévitablement un arrêt irréversible d'écriture. De plus, outre la stabilisation lors de la phase de dispersion (absence de dépôt ou de ségrégation), une stabilisation sur du long terme (> 3 ans) est nécessaire pour cette application.

A contrario, une encre contenant des colorants est très facile à formuler : les colorants sont solubles dans le milieu, et s'il n'y a pas d'additifs supplémentaires sous forme solide, les problèmes précédemment cités pour les encres à base de pigment ne seront pas rencontrés.

En revanche les colorants posent les problèmes suivants : d'une part ils ont une faible tenue à la lumière (dans certains cas), mais surtout, après le séchage du dépôt sur le papier, ils peuvent être re-solubilisés en faisant simplement tremper la trace déposée sur le papier dans le solvant approprié. De plus, outre le fait de solubiliser ces colorants, certains solvants très agressifs cassent les liaisons chromophores, détruisant ainsi la couleur. Ainsi, il est possible d'effacer complètement le trait, et dans ces conditions, une encre à base de colorants ne peut pas être utilisée pour en faire une encre de sécurité.

Les inventeurs se sont aperçus de façon surprenante que l'on pouvait utiliser des encres à base de colorants en tant qu'encre d'écriture de sécurité en piégeant les colorants après dépôt sur le papier par le biais d'une réaction chimique, la photoréticulation, qui emprisonne les colorants dans un réseau résistant au panel classique de solvants (normalisé par le Laboratoire National de métrologie des Essais (LNE) sur la base de la norme ISO12757-2), ce qui permet de donner un caractère ineffaçable à l'encre.
En particulier, les inventeurs ont découvert qu'il était possible d'utiliser des encres photoréticulables dans des instruments d'écriture. Ce type d'encre a l'avantage de réticuler rapidement ce qui permet de conférer rapidement à l'encre son caractère d'encre de sécurité. En effet, après application de l'encre sur le papier, elle est irradiée par une source UV ou visible ce qui provoque la réticulation de l'encre. Les colorants se retrouvent alors piégés à l'intérieur du réseau chimique formé au sein même des fibres de papier. Cette réaction, très rapide, permet de « protéger » les colorants, et ainsi le trait d'encre formé ne peut pas s'effacer (sans détérioration du papier), quel que soit le solvant utilisé. De plus, il ne s'efface pas non plus par action mécanique (friction).
En outre, les inventeurs ont pu formuler ces encres sans solvant, ce qui permet d'éviter tous les problèmes écologiques rencontrés par les solvants organiques et tous les problèmes de lenteur de séchage rencontrés par les solvants aqueux.

Il est connu d'après les demandes WO2008/093071 et WO2008/009987 des encres d'impression photoréticulables. Toutefois ces encres ne sont pas utilisables dans des instruments d'écriture type stylos à billes, en particulier des stylos à billes de débit compris entre 10 et 300 mg/200 m.
En effet, par exemple dans le cadre de la demande WO2008/093071, l'encre décrite est une encre d'impression inkjet dont la viscosité doit être inférieure à 100mPa.s à 25°C et sa température d'utilisation est en générale de 40°C. Une telle viscosité la rend impropre à une utilisation dans des stylos à billes : elle est trop fluide et l'encre fuirait par la pointe du stylo. En outre la puissance UV à appliquer pour obtenir une réticulation efficace est très importante (utilisation de lampes 2X80W/cm), ce qui n'est pas compatible avec la sécurité des consommateurs pour les instruments d'écriture.
Dans le cadre de la demande WO2008/009987, les encres d'impression décrites sont des encres « screen printing ». Ce sont des encres ayant une très forte viscosité, comprise entre 20 et 80 Pa.s à 25°C. Or des viscosités supérieures à 30Pa.s ne sont pas faciles à mettre en œuvre dans le cadre des stylos à billes car elles nécessitent des systèmes d'écritures spécifiques avec mise sous pression de la cartouche. Par ailleurs dans la demande WO2008/009987, la teneur en pigment est très importante (entre 20 et 60% en poids et même de préférence entre 40 et 50% en poids). Une telle quantité de pigment est impossible à utiliser dans une encre pour stylo à bille car la viscosité obtenue serait trop élevée et il y aurait un grand risque de décantation et de bouchage de la pointe par les pigments.
La demande WO2006/111494 décrit une encre photoréticulable, éventuellement utilisables dans des stylos à billes. Toutefois, aucun exemple de réalisation d'encre pour stylo-bille n'est présent dans ce document. Les exemples de réalisation concernent plutôt les encres d'impression dont la viscosité n'est pas adaptée à une utilisation dans des stylos, en particulier des stylos à billes. En outre cette encre préconise la présence d'un stabilisateur constitué par un mélange de radical nitroxyl stériquement encombré et de quinone methide. Enfin ce document ne précise pas si l'encre décrite est une encre sans solvant. Or les inventeurs se sont aperçus qu'il était possible d'obtenir une formulation d'encre d'écriture photoréticulable, utilisable en particulier dans des stylos, plus particulièrement des stylos à billes, en utilisant des quantités bien précises de chacun des ingrédients.

La présente invention concerne donc une encre d'écriture photoréticulable sans solvant, avantageusement pour stylo, plus particulièrement pour stylo à bille, comprenant, en pourcentage en poids par rapport au poids total de l'encre :
a- entre 40 et 75 % d'un oligomère acrylate et/ou méthacrylate photoréticulable,
b- entre 1 et 55 % d'un monomère acrylate et/ou méthacrylate photoréticulable,
c- entre 0,5 et 6 % d'un photoamorceur
d- entre 1 et 10 % d'un colorant, avantageusement de type basique, et
e- entre 0 et 10 % d'un additif.

Au sens de la présente invention on entend par « encre d'écriture » toute encre qui est destinée à être utilisée dans un instrument d'écriture. Une encre d'écriture est à opposer à une encre d'impression qui est utilisée dans des machines d'impression et qui ne répond pas aux mêmes contraintes techniques et donc au même cahier des charges. En effet, une encre d'écriture ne doit pas contenir de particules solides dont la taille est supérieure aux canaux de l'instrument d'écriture, afin d'éviter de les boucher, ce qui entraînerait inévitablement un arrêt irréversible d'écriture. En outre une encre d'écriture ne doit pas être trop fluide pour éviter les fuites lors de l'écriture. Elle doit cependant être suffisamment fluide pour faciliter l'aisance dans le geste d'écriture. Par exemple :
- pour les stylos à billes, l'encre doit en général avoir une viscosité à 20°C comprise entre 10000 - 20000mPa.s, plus particulièrement inférieure à 20000mPa.s ou dans le cas des encres à faibles viscosités entre 500 et 5000mPa.s (viscosité mesurée à 20°C avec le rhéomètre thermohaake RS1 avec un mobile C35-1°, palier à 100s-1 pendant 2 min).
- pour les stylos à encre gel, la viscosité, mesurée au repos à 20°C, est d'environ 30000mPa.s et mesurée avec une vitesse de 100s⁻¹, est inférieure à 500 mPa.s à environ 5000 s-1 (la mesure de viscosité se fait avec le rhéomètre thermohaake RS1 avec un mobile C60-1° rampe de 0 à 1s-1 pendant 30 seconde puis palier à 1s-1 pendant 1min puis rampe de 1s-1 à 5000s-1 pendant 1 min puis palier à 5000s-1 pendant 30s).
- pour les stylos roller, la viscosité mesurée à 20°C est inférieure à environ 50 mPa.s (la mesure de viscosité se fait à 100s-1 avec le viscosimètre brookfield avec un mobile ULA et un contenant de 16ml.).
En outre elle doit permettre un débit d'encre adapté à l'instrument d'écriture utilisé en particulier un débit compris entre 10 et 300 mg/200 m d'écriture, avantageusement entre 15 et 20 mg/150 m d'écriture. Elle doit également sécher suffisamment rapidement pour éviter de maculer le support d'écriture. Elle doit également éviter les phénomènes de migration (bleeding) au cours du temps. Ainsi l'encre selon la présente invention sera adaptée à l'instrument d'écriture à laquelle elle est destinée.
L'instrument d'écriture peut ainsi être un stylo, un feutre à pointe fine, moyenne ou large, un marqueur ou un surligneur. Avantageusement il s'agit d'un stylo, en particulier choisi parmi les stylos à bille, les stylos roller et les stylos à encre gel, plus particulièrement il s'agit d'un stylo à bille.

Au sens de la présente invention on entend par « encre sans solvant » toute encre qui ne contient aucun solvant aqueux ou organique, même en faible proportion. En effet, certains de ses constituants sont suffisamment liquides pour rendre l'utilisation de solvants inutile.

Au sens de la présente invention on entend par « encre photoréticulable » toute encre qui réticule par l'action des UV ou de la lumière visible, avantageusement des UV, en particulier les UV-A. La source d'irradiation UV ou visible qui permet la réticulation de ces encres peut émettre une longueur d'onde mono ou polydisperse, en particulier monodisperse, avantageusement choisie dans la gamme comprise entre 230 et 410 nm, tel que par exemple 232, 240, 275, 293, 307, 318, 327, 360, 365, 382 et 405. La source d'irradiation peut ainsi être une diode électroluminescente (LED) monodisperse ou une lampe aux halogénures métalliques polydisperse, tel que par exemple une lampe à vapeur de mercure dopé, ou les deux.
Au sens de la présente invention on entend par «oligomère », toute chaîne polymérique de petite taille, avantageusement constituée d'au moins deux monomères et plus avantageusement d'au plus 20 monomères. En particulier un oligomère présente une faible masse moléculaire, en général inférieure à 4000g/mol.

Au sens de la présente invention on entend par «oligomère acrylate et/ou méthacrylate photoréticulable », tout oligomère tel que défini ci-dessus présentant au moins un motif acrylate et/ou méthacrylate et réticulant par le biais d'une réaction radicalaire sous l'action des UV ou de la lumière visible. Avantageusement l'oligomère selon la présente invention est choisi parmi les acrylates, les méthacrylates, les polyuréthanes aliphatiques acrylates, les polyuréthanes aromatiques acrylates, les polyesters acrylates, les polyéthers acrylates, les polyépoxy acrylates, les polyuréthanes aliphatiques méthacrylates, les polyuréthanes aromatiques méthacrylates, les polyesters méthacrylates, les polyéthers méthacrylates, les polyépoxy méthacrylates et leurs mélanges, avantageusement parmi les polyuréthanes aromatiques acrylates, les polyesters acrylates et les polyuréthanes aliphatiques acrylates, encore plus avantageusement parmi les polyuréthanes aromatiques acrylates et les polyuréthanes aliphatiques acrylates, en particulier parmi polyuréthanes aromatiques acrylates. De façon particulièrement avantageuse, l'oligomère selon la présente invention est un oligomère acrylate photoréticulable. Les oligomères selon la présente invention peuvent présenter des fonctionnalités en bout de chaînes allant de 2 à 16, en particulier 6, et une viscosité pouvant aller de 320 à 50000 mPa.s mesurée à 20°C, en particulier entre 1000 et 50000 mPa.s. L'oligomère selon la présente invention peut par exemple être un oligomère hexacrylate, en particulier un polyuréthane aromatique hexacrylate ou un polyuréthane aliphatique hexacrylate, plus particulièrement un polyuréthane aromatique hexacrylate. Ces oligomères sont disponibles commercialement, par exemple auprès de la société Sartomer sous le nom commercial CN9196 ou CN9110 EU.
L'encre photoréticulable selon l'invention contient (en poids par rapport au poids total de l'encre) entre 40 et 75 % de l'oligomère acrylate et/ou méthacrylate photoréticulable, avantageusement entre 41 et 73 %, encore plus avantageusement entre 60 et 73%, de façon particulièrement préférée entre 69 et 72%. La teneur en oligomère permet en particulier d'obtenir la viscosité adéquate pour l'utilisation de l'encre dans des instruments d'écriture, en particulier les stylos à billes. Ainsi, si la teneur est inférieure à 40% en poids, la viscosité ne sera pas suffisante.

Au sens de la présente invention on entend par «monomère acrylate et/ou méthacrylate photoréticulable », tout monomère présentant au moins un motif acrylate et/ou méthacrylate et réticulant par le biais d'une réaction radicalaire sous l'action des UV ou de la lumière visible.
Avantageusement le monomère selon la présente invention est choisi parmi les acrylates mono ou polyfonctionnalisés, les méthacrylates mono ou polyfonctionnalisés et leurs mélanges, avantageusement parmi les acrylates polyfonctionnalisés. Il peut en particulier s'agir d'un monomère de mono-, di-, tri-, tétra-, penta- acrylates et méthacrylates (hydroxylés, éthoxylés, propoxylés, alkoxylés), aromatique ou aliphatique, possédant ou non des chaînes polymères courtes de type polyéther, polyuréthane, polyesters, polyépoxy, modifiés ou non par des groupements amines. Ces monomères peuvent présenter des fonctionnalités en bout de chaîne allant de 2 à 16 et en particulier une viscosité pouvant aller de 6 à 21600 mPa.s mesurée à 20°C, en particulier de 100 à 500 mPa.s. Le monomère selon la présente invention peut ainsi être un polyester acrylate hyperbranché ou un tétra-acrylate éthoxylé pentaérythritol. En particulier il est disponible commercialement auprès de la société Sartomer sous la dénomination commerciale CN2302 et SR494LM.
Le monomère permet de diminuer la viscosité de l'encre.
L'encre photoréticulable selon l'invention contient (en poids par rapport au poids total de l'encre) entre 1 et 55 % du monomère acrylate et/ou méthacrylate photoréticulable, avantageusement entre 10 et 50 %, de façon avantageuse entre 10 et 40 %, en particulier entre 10 et 30 %, plus particulièrement entre 15 et 25 %. Si la teneur en monomère est supérieure à 55% en poids, la viscosité ne sera pas suffisante pour l'utilisation de l'encre dans des instruments d'écriture, en particulier les stylos à billes.

Au sens de la présente invention on entend par « photoamorceur » tout produit qui permet d'amorcer la réaction de réticulation par voie radicalaire des oligomères et des monomères éventuellement présents dans l'encre selon l'invention lors de leur irradiation par une source UV ou visible. En effet le photoamorceur, en absorbant l'énergie des photons émis, va devenir une espèce excitée (sous forme radicalaire). Ainsi cette espèce réagit avec les fonctions réactives des oligomères et des éventuels monomères de l'encre, entraînant une réticulation de la matière. Le photoamorceur est donc avantageusement un photoamorceur absorbant dans les UV ou le visible, plus avantageusement un photoamorceur absorbant dans les UV-A. En particulier le photoamorceur selon la présente invention permettra un amorçage en surface et/ou en profondeur de la réaction de polymérisation radicalaire. Plus particulièrement le photoamorceur selon la présente invention absorbe les longueurs d'onde d'émission des lampes/LED, et/ou les longueurs d'onde choisies dans la gamme comprise entre 230 et 410 nm, tel que par exemple 232, 240, 275, 293, 307, 318, 327, 360, 365, 382 et 405 nm. Dans un mode de réalisation particulier le photoamorceur est de type I, avantageusement il s'agit d'un photoamorceur de type acyle phosphine oxyde, plus particulièrement il s'agit de l'éthyl 2,4,6-triméthylbenzoylphenylphosphinate ou ester éthylique de l'acide 2,4,6- triméthylbenzoylphénylphosphinique. Ces photoamorceur sont disponibles commercialement par exemple auprès de la société BASF sous les dénominations commerciales Lucirin TPO-L et Irgacure® 2100.
L'encre photoréticulable selon l'invention contient (en poids par rapport au poids total de l'encre) entre 0,5 et 6 % du photoamorceur, avantageusement entre 4 et 6 %, en particulier environ 5 %.

L'encre photoréticulable selon l'invention est une encre à base de colorants. Elle comprend donc au moins un colorant, elle peut également en comprendre plusieurs. Les colorants utilisables dans l'encre selon l'invention peuvent être des colorants noirs, bleu, rouge, vert, violet, rose, turquoise etc., en particulier noir ou bleu, plus particulièrement bleu. De façon avantageuse elle ne comprend pas de pigments, et en particulier pas d'oxyde de titane. En particulier les colorants utilisables dans l'encre selon la présente invention sont de type basique. Il peut s'agir par exemple de colorants appartenant à la famille chimique des triarylméthanes tel que par exemple le colorant bleu commercialisé par la société BASF sous la dénomination Basonyl® 636.
L'encre photoréticulable selon l'invention contient (en poids par rapport au poids total de l'encre) entre 1 et 10 % du colorant, avantageusement entre 3 et 5 %, plus particulièrement 4 %.
Le colorant se solubilise dans le milieu constitué par les monomères et oligomères photoréticulables selon la présente invention. Ceci explique pourquoi il n'est pas nécessaire d'ajouter un solvant dans l'encre selon la présente invention.

Dans un mode de réalisation particulier, l'encre selon la présente invention ne comprend pas de pentaérythritol acrylate et/ou méthacrylate non éthoxylé et ou d'itaconate.

L'encre photoréticulable selon l'invention peut comprendre en outre un additif. Cet additif est en général un additif classique des encres d'écriture. Avantageusement cet additif ne se trouve pas sous forme solide. Dans un mode de réalisation particulier, cet additif est choisi parmi un photosensibilisateur, un accélérateur de réticulation, en particulier du type possédant un groupement amine cosynergiste, un lubrifiant, un additif de démarrage, un agent anticorrosion, un biocide, un agent neutralisant, un agent humectant, agent anti-séchage, une résine, un liant, un épaississant, un agent de rhéologie, un tensio-actif et leurs mélanges.
L'encre photoréticulable selon l'invention peut contenir (en poids par rapport au poids total de l'encre) entre 0 et 10 % de l'additif.

Ainsi dans un mode de réalisation particulier, l'encre photoréticulable selon la présente invention comprend en pourcentage en poids par rapport au poids total de l'encre:
a- entre 41 et 73 % de l'oligomère acrylate et/ou méthacrylate photoréticulable, encore plus avantageusement entre 60 et 73%, de façon particulièrement préférée entre 69 et 72% ;
b- entre 10 et 50 % du monomère acrylate et/ou méthacrylate photoréticulable, de façon avantageuse entre 10 et 40 %, en particulier entre 10 et 30 %, plus particulièrement entre 15 et 25 %;
c- entre 4 et 6 % du photoamorceur, en particulier environ 5 % ;
d- entre 3 et 5 % du colorant, plus particulièrement 4 % et
e- entre 0 et 10 % de l'additif.

En particulier l'encre selon la présente invention ne comprend pas de stabilisant tel que décrit dans la demande WO2006/111494, c'est-à-dire de mélange de radical nitroxyl stériquement encombré et de quinone methide.
En effet les inventeurs se sont aperçus que dans le cadre de la formulation d'encre selon l'invention, il était inutile d'utiliser un tel stabilisant car la composition ne présente pas de dégradation par exemple au niveau de l'augmentation de viscosité (ce qui impliquerait un début de réticulation intempestive) au cours du temps, même après un vieillissement de 2 mois à 40°C et 80%HR (humidité relative) à l'abri de la lumière mais en présence d'oxygène, ce qui équivaut à environ 6 mois à 23°C et 50% HR.

La présente invention concerne en outre un procédé de sécurisation d'un support d'écriture caractérisé en ce qu'il comprend les étapes successives suivantes :
A. application de l'encre photoréticulable selon la présente invention sur un support d'écriture, avantageusement un support papier ou carton, en particulier à l'aide d'un instrument d'écriture, tel qu'un stylo, plus particulièrement un stylo à bille ;
B - irradiation de l'encre appliquée à l'aide d'une source d'irradiation UV ou visible de façon à sécher l'encre et à provoquer une réticulation de l'oligomère acrylate et/ou méthacrylate photoréticulable, avantageusement pendant une durée comprise entre 1 et 10 s avec une dose d'irradiation de 100 mW/cm². L'instrument d'écriture peut-être tel que décrit ci-dessus pour les encres d'écriture. Avantageusement il s'agit d'un stylo, en particulier tel que décrit ci-dessus, de façon plus particulière un stylo à bille de débit compris entre 10 et 300 mg/200m d'écriture, avantageusement entre 15 et 20 mg/150m d'écriture. La source d'irradiation UV ou visible est telle que décrite ci-dessus.

La présente invention concerne en outre l'encre réticulée obtenue par réticulation de l'encre photoréticulable selon la présente invention. La réticulation peut être obtenue à l'aide d'une source d'irradiation UV ou visible telle que décrite ci-dessus.
De façon avantageuse l'encre réticulée selon la présente invention résiste aux solvants choisis parmi le diméthylformamide, l'éthanol, l'acétone, l'alcool benzylique et leurs mélanges. Ceci signifie que les traces obtenues avec l'encre réticulée restent parfaitement visibles et homogènes après immersion dans l'un de ces solvants, qu'elles ne pâlissent pas. Elle est donc ineffaçable à l'aide de ces solvants selon la norme ISO12757-2. En particulier le test de résistance au solvant correspond à celui de la norme ISO12757-2 qui a été modifiée par le Laboratoire National de métrologie des Essais (LNE) dont la procédure est la suivante :
**Equipement** :
   1. Salle climatisée : 23°C (± 2°C) / 50% RH (± 5%)
   2. 14 flacons verres avec couvercle Ø 60 mm / hauteur 80 mm.
   3. Machine d'écriture APC ou Mikron avec :
      - Papier ISO 12757
      - Poids total stylo + corps + poids supplémentaire : 200 g stylos billes - 100 g pour roller et gel.
      - Vitesse 4,5 m/min, espacement 2,2 mm (Mikron : position 8)
   4. Agitateur va-et-vient
   5. Chronomètre
   6. Papier absorbant
**Réactifs** :
   1. Eau distillée ou déminéralisée
   2. Mélange 50/50 : Ethanol à 90% / Benzène
   3. Solution saturée de sulfite de sodium
   4. Eau de Javel à 12° chlorométrique (1 berlingot de 250 mL à 9,6% ca (chlore actif) + 487 mL d'eau)
   5. Acide chlorhydrique (solution à 10 % massique d'une solution concentrée à d=1,19)
   6. Potasse : (38,56 g de KOH à dissoudre dans 961,4 g d'eau)
   7. Alcool benzylique
   8. 2-chloro éthanol (chlorhydrine du glycol)
   9. Diméthylformamide
   10 a). Acide sulfurique 1N (50 g de concentré 98% dans 1L)
   10 b). Permanganate de potassium 1N (31,6 g de permanganate de potassium dans 1L d'eau)
   10 c). Bisulfite de sodium 2N (9,5 g de métabisulfite de sodium dans 1L d'eau)
   11 a). Acétone
**Procédure:**
   1. Remplir les flacons avec les solutions indiquées ci-dessous sur une hauteur d'environ 2 cm, les étiqueter.
   2. Réaliser une écriture d'environ 40 m dans les conditions suivantes
      - Vitesse 4,5 m/min
      - Espacement 2,2 mm (Mikron : position 8)
      - Angle d'écriture : 70°
   3. Découper 12 éprouvettes de 5 cm de longueur et 4 cm de largeur en évitant le début et la fin de la trace, les irrégularités et les tâches.
   4. Pour chaque test, laisser reposer les éprouvettes à 23°C/50%RH selon le temps indiqué dans le tableau 1 ci-dessous.
   5. Conserver une éprouvette comme référence.
   6. Tremper les éprouvettes dans les solutions indiquées ci-dessous. Placer les flacons sur le va-et-vient (vitesse ∼60 tour/min) selon le temps indiqué si l'immersion doit être faite sous agitation.
   7. Enlever les traces, puis les placer sur un papier absorbant jusqu'à ce qu'elles soient sèches.
   8. Coller les différentes éprouvettes
   9. Les traces doivent rester parfaitement visibles. Un produit pourra être considéré « check safe » si chaque trace reste homogène et parfaitement visible après immersion dans chaque solvant.

**Le tableau 1 ci-dessous récapitule les différentes conditions.**

| | | **Temps de repos avant trempage** | **Temps d'immersion** |
|---|---|---|---|
| **1** | Eau distillée ou déminéralisée | Quelques minutes | 1H sous agitation |
| **2** | Mélange 50/50 : Ethanol à 90%/Benzène | | |
| **3** | Solution saturée de sulfite de sodium | | |
| **4** | Eau de Javel | | |
| **5** | Acide chlorhydrique | | |
| **6** | Potasse | | |
| **7** | Alcool benzylique | | |
| **8** | 2-chloro éthanol | | |
| **9** | Diméthylformamide | | |
| **10** | bille correcteur | | 30 secondes dans a), puis 5 min dans b) puis jusqu'à décoloration de la tâche brunâtre dans c) sous agitation |
| | a) acide sulfurique 1N | | |
| | b) permanganate de potassium 1N | | |
| | c) bisulfite de sodium 2N | | |
| **11** | Vérification de lavage | 10 min | 5 min dans Acétone puis 10 min dans eau sans agitation |
| | a) Acétone | | |
| | b) Eau | | |

La présente invention concerne enfin un stylo pour encre photoréticulable comprenant l'encre photoréticulable selon la présente invention.
Ce stylo peut en outre être muni d'une source d'irradiation UV ou visible telle que définie ci-dessus, en particulier émettant une longueur d'onde mono ou polydisperse, plus particulièrement monodisperse choisie dans la gamme comprise entre 232 et 410 nm.
Le stylo selon l'invention peut être choisi parmi les stylos à bille, les stylos roller et les stylos à encre gel, plus particulièrement il s'agit d'un stylo à bille, avantageusement de débit compris entre 10 et 300 mg/200m d'écriture, avantageusement entre 15 et 20mg/150m d'écriture.
La présente invention sera mieux comprise à la lumière de l'exemple qui suit qui est donné à titre indicatif non limitatif.

### Exemple

6 formulations d'encre photoréticulable ont été préparées ayant la composition indiquée dans le tableau 2 ci-dessous en pourcentage en poids par rapport au poids total de la formulation :

| **Formule** | **Oligomère** | | **Monomère** | | **Photoamorceur** | | **Colorant (bleu)** | |
|---|---|---|---|---|---|---|---|---|
| **N°** | Nom | % | Nom | % | Nom | % | Nom | % |
| **1** | CN9196 | 71 | CN2302 | 20 | Lucirin TPO-L | 5 | Basonyl 636 | 4 |
| **2** | CN9196 | 71 | SR494LM | 20 | Lucirin TPO-L | 5 | Basonyl 636 | 4 |
| **3** | CN9110EU | 61 | SR494LM | 30 | Lucirin TPO-L | 5 | Basonyl 636 | 4 |
| **4** | CN9110EU | 41 | SR494LM | 50 | Lucirin TPO-L | 5 | Basonyl 636 | 4 |
| **5** | CN9110EU | 61 | SR494LM | 30 | Irgacure 2100 | 5 | Basonyl 636 | 4 |
| **6** | CN9196 | 61 | SR494LM | 30 | Irgacure 2100 | 5 | Basonyl 636 | 4 |

Les encres réalisées ont été injectées dans des cartouches de type stylo bille (tests avec différentes sortes de pointes). Des traces d'écriture manuelle et machine ont été réalisées afin d'observer la qualité de l'encre (débit, teinte, défauts,...).

Ces mêmes traces ont été soumises à des doses d'irradiation précises (équivalentes à 500-1500mJ.cm⁻² en UV-A à l'aide d'une lampe aux halogénures métalliques) pendant 10 seconde puis trempés dans les solvants jugés comme les plus « agressifs », à savoir : alcool benzylique, diméthylformamide, éthanol et acétone en utilisant la procédure indiquée ci-dessus pour le test de résistance au solvant. Lorsque la trace est toujours présente (même si l'intensité de la couleur est atténuée), cela prouve qu'une réticulation a bien pris place et l'encre peut être qualifiée d'ineffaçable.

Ont ainsi été évalués les critères suivants pour discriminer les meilleurs systèmes :
- Taux de réticulation des films sur des plaques de verre (degré de conversion en surface et en profondeur des films), à différentes épaisseurs (25 à 175 µm).
- Jaunissement des résines (réticulation avant l'ajout des colorants).
- Absence de collant (révélateur d'une réticulation incomplète, ralentie à cause d'une réaction indésirable en surface par contact avec l'oxygène de l'air, et ainsi ne créant pas le réseau de façon optimale), notamment pour les échantillons évalués sur des plaques de verre.
- Après dépôt des encres de façon reproductible (machines d'écriture) et irradiation de celles-ci à une dose de 500-1500mJ.cm⁻² en UV-A à l'aide d'une lampe aux halogénures métalliques pendant 10 seconde, test de la résistance à 4 solvants différents : alcool benzylique, diméthylformamide, éthanol et acétone.
- Performances évaluées en fonction de la source d'irradiation.
- Evaluation de la viscosité en vue d'une application de stylo bille, et ainsi évaluation des performances « esthétiques » de chaque système (notamment, vérification de l'absence de diffusion latérale trop importante dans le papier).
- Evaluation de la capacité à réticuler et/ou à sécher en absence de lumière UV mais en conditions de lumière du jour ambiante.
- Comportement des résines polymères lors d'un vieillissement (évaluation de la capacité hygroscopique et ses conséquences sur la stabilité de la viscosité dans le temps à 40°C et 80 % d'humidité relative).

Les viscosités de ces différentes encres sont rassemblées dans le tableau 3 ci-dessous :

| **Formule N°** | **Viscosité mesurée à 20 °C et 100s⁻¹ en mPa.s, avec le rhéomètre Rheometre ThermoHaake RS1 avec un mobile C35-1°, palier à 100s⁻¹ pendant 2 min** |
|---|---|
| **1** | 28 310 |
| **2** | 24 910 |
| **3** | 20 913 |
| **4** | 4 080 |
| **5** | 12 915 |
| **6** | 21 385 |

Le traces obtenues avec un stylo de type stylo à bille en utilisant les encres ci-dessus se sont révélées être adaptées (traces d'écritures sans défauts).

Les débits d'encres qui ont été mesurées sont dans le même ordre de grandeur qu'un stylo à bille classique.

Les résines oligomères sont un peu hygroscopiques et prennent toutes moins de 4 % d'eau après six mois de vieillissement à 40 °C et 80 % d'humidité relative.

La viscosité des encres se stabilise au bout d'un mois de vieillissement à 40 °C et 80 % d'humidité relative.

Les encres réticulées sont ineffaçables et résistent aux solvants testés.

Les meilleurs résultats ont été obtenus avec la formule N°1.

La formule N°2 est un peu plus sujette à sécher dans le corps du stylo et a donc des performances écriture un peu moins bonne que la formule N°1.

La formule N°3 a une résistance un peu moins bonne aux solvants que les formules N°1 et 2.

Les formules N°4, 5 et 6 ont une résistance aux solvants un peu moins bonne que les formules N°1 et 2 et les encres sont également sujettes au séchage.

## Revendications

1. Encre d'écriture photoréticulable sans solvant, avantageusement pour stylo, comprenant, en pourcentage en poids par rapport au poids total de l'encre:
a- entre 40 et 75 % d'un oligomère acrylate et/ou méthacrylate photoréticulable,
b- entre 1 et 55 % d'un monomère acrylate et/ou méthacrylate photoréticulable,
c- entre 0,5 et 6 % d'un photoamorceur
d- entre 1 et 10 % d'un colorant, avantageusement de type basique et
e- entre 0 et 10 % d'un additif.

2. Encre selon la revendication 1, **caractérisée en ce qu'**elle est destinée au stylo à bille.

3. Encre selon l'une quelconque des revendications 1 ou 2, **caractérisée en ce que** l'oligomère acrylate et/ou méthacrylate photoréticulable est choisi parmi les acrylates, les méthacrylates, les polyuréthanes aliphatiques acrylates, les polyuréthanes aromatiques acrylates, les polyesters acrylates, les polyéthers acrylates, les polyépoxy acrylates, les polyuréthanes aliphatiques méthacrylates, les polyuréthanes aromatiques méthacrylates, les polyesters méthacrylates, les polyéthers méthacrylates, les polyépoxy méthacrylates et leurs mélanges, avantageusement parmi les polyuréthanes aromatiques acrylates, les polyesters acrylates et les polyuréthanes aliphatiques acrylates.

4. Encre selon l'une quelconque des revendications 1 à 3, **caractérisée en ce que** le monomère acrylate et/ou méthacrylate photoréticulable est choisi parmi les acrylates mono ou polyfonctionnalisés, les méthacrylates mono ou polyfonctionnalisés et leurs mélanges, avantageusement parmi les acrylates polyfonctionnalisés.

5. Encre selon l'une quelconque des revendications 1 à 4, **caractérisée en ce que** le photoamorceur est de type I, avantageusement il s'agit de l'éthyl 2,4,6-triméthylbenzoylphenylphosphinate.

6. Encre selon l'une quelconque des revendications 1 à 5, **caractérisée en ce que** l'additif est présent et choisi parmi un photosensibilisateur, un accélérateur de réticulation, un lubrifiant, un additif de démarrage, un agent anticorrosion, un biocide, un agent neutralisant, un agent humectant, agent anti-séchage, une résine, un liant, un épaississant, un agent de rhéologie, un tensio-actif et leurs mélanges.

7. Encre selon l'une quelconque des revendications 1 à 6, **caractérisée en ce qu'**elle comprend en pourcentage en poids par rapport au poids total de l'encre:
a- entre 41 et 73 % de l'oligomère acrylate et/ou méthacrylate photoréticulable;
b- entre 10 et 50 % du monomère acrylate et/ou méthacrylate photoréticulable;
c- entre 4 et 6 % du photoamorceur%,
d- entre 3 et 5 % du colorant et
e- entre 0 et 10 % de l'additif.

8. Procédé de sécurisation d'un support d'écriture **caractérisé en ce qu'**il comprend les étapes successives suivantes :
A. application de l'encre photoréticulable selon l'une quelconque des revendications 1 à 7 sur un support d'écriture, avantageusement un support papier ou carton, en particulier à l'aide d'un stylo d'écriture ;
B - irradiation de l'encre appliquée à l'aide d'une source d'irradiation UV ou visible de façon à sécher l'encre et à provoquer une réticulation de l'oligomère acrylate et/ou méthacrylate photoréticulable, avantageusement pendant une durée comprise entre 1 et 10 s avec une dose d'irradiation de 100 mW/cm².

9. Procédé selon la revendication 8, **caractérisé en ce que** le stylo d'écriture est un stylo à bille de débit compris entre 10 et 300 mg/200m d'écriture, avantageusement entre 15 et 20 mg/150m d'écriture.

10. Encre réticulée obtenue par réticulation de l'encre photoréticulable selon l'une quelconque des revendications 1 à 7.

11. Encre réticulée selon la revendication 10, **caractérisée en ce qu'**elle résiste aux solvants choisis parmi le diméthylformamide, l'éthanol, l'acétone, l'alcool benzylique et leurs mélanges.

12. Stylo pour encre photoréticulable comprenant l'encre photoréticulable selon l'une quelconque des revendications 1 à 7.

13. Stylo selon la revendication 12, **caractérisé en ce qu'**il est muni d'une source d'irradiation UV ou visible.

14. Stylo selon la revendication 13, **caractérisé en ce que** la source d'irradiation UV ou visible émet une longueur d'onde mono ou polydisperse, en particulier monodisperse choisie dans la gamme comprise entre 232 et 410 nm.

15. Stylo selon l'une quelconque des revendications 12 à 14, **caractérisé en ce qu'**il s'agit d'un stylo à bille, avantageusement de débit compris entre 10 et 300 mg/200m d'écriture, avantageusement entre 15 et 20mg/150m d'écriture.

## Patentansprüche

1. Lösemittelfreie, photovernetzbare Schreibtinte, insbesondere für Stifte geeignet, und mit folgenden Bestandteilen, in Gewichtsprozent bezogen auf das Gesamtgewicht der Tinte:
a- zwischen 40 und 75% eines photovernetzbaren Acrylat- und/oder Methacrylat-Oligomers,
b- zwischen 1 und 55% eines photovernetzbaren Acrylat- und/oder Methacrylat-Monomers,
c- zwischen 0,5 und 6% eines Photoinitiators
d- zwischen 1 und 10% eines Farbstoffes, vorzugsweise basischen Typs und
e- zwischen 0 und 10% eines Zusatzstoffes.

2. Tinte nach Anspruch 1, **dadurch gekennzeichnet, dass** sie für einen Kugelschreiber bestimmt ist.

3. Tinte nach einem der Ansprüche 1 oder 2, **dadurch gekennzeichnet, dass** das photovernetzbare Acrylat- und/oder Methacrylatoligomer ausgewählt ist aus Acrylaten, Methacrylaten, aliphatischen Polyurethanacrylaten, aromatischen Polyurethanacrylaten, Polyesteracrylaten, Polyetheracrylaten, Polyepoxyacrylaten, Aliphatischen Methacrylat-Polyurethanen, aromatischen Methacrylat-Polyurethanen, Polyester-Methacrylaten, Polyether-Methacrylaten, Polyepoxy-Methacrylaten und deren Mischungen, vorzugsweise aus aromatischen Acrylat-Polyurethanen, Polyester-Acrylaten und aliphatischen Acrylat-Polyurethanen.

4. Tinte nach einem der Ansprüche 1 bis 3, **dadurch gekennzeichnet, dass** das photovernetzbare Acrylat- und/oder Methacrylat-Monomer ausgewählt ist aus mono- oder polyfunktionalisierten Acrylaten, mono- oder polyfunktionalisierten Methacrylaten und Mischungen davon, vorzugsweise aus polyfunktionalisierten Acrylaten.

5. Tinte nach einem der Ansprüche 1 bis 4, **dadurch gekennzeichnet, dass** der Photoinitiator vom Typ I ist, vorzugsweise Ethyl-2,4,6-trimethylbenzoylphenylphosphinat.

6. Tinte nach einem der Ansprüche 1 bis 5, **dadurch gekennzeichnet, dass** das Additiv vorhanden ist und ausgewählt ist aus einem Photosensibilisator, einem Vernetzungsbeschleuniger, einem Schmiermittel, einem Starteradditiv, einem Korrosionsschutzmittel, einem Biozid, einem Neutralisationsmittel, einem Feuchthaltemittel, einem Anti-Trockenmittel, einem Harz, einem Bindemittel, einem Verdickungsmittel, einem Rheologiemittel, einem Tensid und Mischungen davon.

7. Tinte nach einem der Ansprüche 1 bis 6, **dadurch gekennzeichnet, dass** sie, in Gewichtsprozent bezogen auf das Gesamtgewicht der Tinte, die folgenden Bestandteile enthält:
a- zwischen 41 und 73% des photovernetzbaren Acrylat- und/oder Methacrylat-Oligomers;
b- zwischen 10 und 50% des photovernetzbaren Acrylat- und/oder Methacrylat-Monomers;
c- zwischen 4 und 6 % des Photoinitiators%,
d- zwischen 3 und 5% des Farbstoffes und
e- zwischen 0 und 10% des Zusatzstoffes.

8. Verfahren zur Befestigung eines Schreibmediums, **dadurch gekennzeichnet, dass** es die folgenden aufeinanderfolgenden Schritte umfasst:
A. Auftragen der photovernetzbaren Tinte nach einem der Ansprüche 1 bis 7 auf ein Schreibmedium, vorzugsweise einen Träger aus Papier oder Karton, insbesondere mit Hilfe eines Schreibstiftes;
B - Bestrahlen der aufgetragenen Tinte mit einer UV-Strahlungsquelle oder einer sichtbaren Strahlungsquelle, um die Tinte zu trocknen und die Vernetzung des photovernetzbaren Acrylat- und/oder Methacrylatoligomers zu bewirken, vorzugsweise für eine Dauer von 1 bis 10 s mit einer Bestrahlungsdosis von 100 mW/cm2.

9. Verfahren nach Anspruch 8, **dadurch gekennzeichnet, dass** der Schreibstift ein Kugelschreiber mit einer Schreibleistung zwischen 10 und 300 mg/200m Schreibleistung, vorzugsweise zwischen 15 und 20 mg/150m Schreibleistung, ist.

10. Vernetzte Tinte, die durch Vernetzung von photovernetzbarer Tinte nach einem der Ansprüche 1 bis 7 erhalten wird.

11. Vernetzte Tinte nach Anspruch 10, **dadurch gekennzeichnet, dass** sie gegenüber Lösungsmitteln, ausgewählt aus Dimethylformamid, Ethanol, Aceton, Benzylalkohol und deren Mischungen, beständig ist.

12. Stift für photovernetzbare Tinte, umfassend die photovernetzbare Tinte nach einem der Ansprüche 1 bis 7.

13. Stift nach Anspruch 12, **dadurch gekennzeichnet, dass** er mit einer UV-Strahlungsquelle oder einer sichtbaren Strahlungsquelle ausgestattet ist.

14. Stift nach Anspruch 13, **dadurch gekennzeichnet, dass** die UV-Strahlungsquelle oder die sichtbare Strahlungsquelle eine monodisperse oder polydisperse, insbesondere monodisperse Wellenlänge, ausgewählt aus dem Bereich zwischen 232 und 410 nm, emittiert.

15. Stift nach einem der Ansprüche 12 bis 14, **dadurch gekennzeichnet, dass** es sich um einen Kugelschreiber handelt, vorzugsweise mit einer Schreibleistung zwischen 10 und 300 mg/200m, vorzugsweise zwischen 15 und 20 mg/150m Schreibleistung.

## Claims

1. Solvent-free, photocrosslinkable writing ink, advantageously for a pen, comprising, in percentage by weight relative to the total weight of the ink:
a- between 40 and 75% of a photocrosslinkable acrylate and/or methacrylate oligomer;
b- between 1 and 55% of a photocrosslinkable acrylate and/or methacrylate monomer;
c- between 0.5 and 6% of a photoinitiator;
d- between 1 and 10% of a dye, advantageously a basic dye; and
e- between 0 and 10% of an additive.

2. Ink according to claim 1, **characterized in that** said ink is intended for a ballpoint pen.

3. Ink according to either claim 1 or claim 2, **characterized in that** the photocrosslinkable acrylate and/or methacrylate oligomer is selected from acrylates, methacrylates, aliphatic polyurethane acrylates, aromatic polyurethane acrylates, polyester acrylates, polyether acrylates, polyepoxy acrylates, aliphatic polyurethane methacrylates, aromatic polyurethane methacrylates, polyester methacrylates, polyether methacrylates, polyepoxy methacrylates and mixtures thereof, advantageously from aromatic polyurethane acrylates, polyester acrylates and aliphatic polyurethane acrylates.

4. Ink according to any of claims 1 to 3, **characterized in that** the photocrosslinkable acrylate and/or methacrylate monomer is selected from monofunctionalized or polyfunctionalized acrylates, monofuctionalized or polyfunctionalized methacrylates and mixtures thereof, advantageously from polyfunctionalized acrylates.

5. Ink according to any of claims 1 to 4, **characterized in that** the photoinitiator is a type I photoinitiator, advantageously being ethyl 2,4,6-trimethylbenzoylphenylphosphinate.

6. Ink according to any of claims 1 to 5, **characterized in that** the additive is present and selected from a photosensitizer, a crosslinking accelerator, a lubricant, a starting additive, an anti-corrosion agent, a biocide, a neutralizing agent, a humectant, an anti-drying agent, a resin, a binder, a thickener, a rheology agent, a surfactant and mixtures thereof.

7. Ink according to any of claims 1 to 6, **characterized in that** said ink comprises, in percentage by weight relative to the total weight of the ink:
a- between 41 and 73% of the photocrosslinkable acrylate and/or methacrylate oligomer;
b- between 10 and 50% of the photocrosslinkable acrylate and/or methacrylate monomer;
c- between 4 and 6% of the photoinitiator;
d- between 3 and 5% of the dye; and
e- between 0 and 10% of the additive.

8. Method for securing a writing medium, **characterized in that** said method comprises the following successive steps:
A. applying the photocrosslinkable ink according to any of claims 1 to 7 to a writing medium, advantageously a paper or cardboard medium, in particular using a writing pen;
B. irradiating the applied ink using a UV or visible irradiation source so as to dry the ink and to cause crosslinking of the photocrosslinkable acrylate and/or methacrylate oligomer, advantageously for a period of time between 1 and 10 s at an irradiation dose of 100 mW/cm².

9. Method according to claim 8, **characterized in that** the writing pen is a ballpoint pen having a flow rate between 10 and 300 mg/200 m of writing, advantageously between 15 and 20 mg/150 m of writing.

10. Crosslinked ink obtained by crosslinking the photocrosslinkable ink according to any of claims 1 to 7.

11. Crosslinked ink according to claim 10, **characterized in that** said ink is resistant to the solvents selected from dimethylformamide, ethanol, acetone, benzyl alcohol and mixtures thereof.

12. Pen for photocrosslinkable ink, comprising the photocrosslinkable ink according to any of claims 1 to 7.

13. Pen according to claim 12, **characterized in that** said pen is provided with a source of UV or visible irradiation.

14. Pen according to claim 13, **characterized in that** the UV or visible irradiation source emits a monodisperse or polydisperse wavelength, in particular a monodisperse wavelength selected in the range between 232 and 410 nm.

15. Pen according to any of claims 12 to 14, **characterized in that** said pen is a ballpoint pen, advantageously having a flow rate between 10 and 300 mg/200 m of writing, advantageously between 15 and 20 mg/150 m of writing.
